Europäisches Patentamt

European Patent Office

Office européen des brevets

(19)

(11) **EP 0 569 063 B1**

(12) **EUROPEAN PATENT SPECIFICATION**

(45) Date of publication and mention
of the grant of the patent:
**03.06.1998 Bulletin 1998/23**

(51) Int Cl.⁶: **H04N 1/40**, H04N 5/217

(21) Application number: **93200882.4**

(22) Date of filing: **27.03.1993**

(54) **Automatic offset and gain control in a document scanner**

Automatische Verschiebung und Verstärkungssteuerung für einen Dokumentenabtaster

Décalage automatique et contrôle d'amplification dans un analyseur de documents

(84) Designated Contracting States:
**BE DE FR GB NL**

(30) Priority: **04.05.1992 EP 92201227**

(43) Date of publication of application:
**10.11.1993 Bulletin 1993/45**

(73) Proprietor: **AGFA-GEVAERT N.V.**
**2640 Mortsel (BE)**

(72) Inventor: **Van Uffel, Bruno, c/o Agfa-Gevaert N.V.**
**B-2640 Mortsel (BE)**

(56) References cited:
**US-A- 3 952 144**      **US-A- 4 660 082**

## Description

### 1. FIELD OF THE INVENTION

The present invention relates to the field of electro-optical scanning and provides a method for correcting, on an individual pixel basis, all unwanted offset and/or gain variations in the input signal representing the shade of darkness or light-ness of the source document.

### 2. BACKGROUND OF THE INVENTION

In an opto-electronic input-scanner apparatus a source document is scanned line by line by a narrowly focused light beam. The light reflected from the scanned document is collected by a suitable photosensor to produce a corresponding video signal whose voltage is representative of the shade of darkness or lightness of the document, hereinafter called "source signal".

However, the actual offset and amplitude of the source signal is subject to variations in accordance with such factors as variations in the intensity of the illuminating light beam, drift of the photosensors due to aging or temperature change, drift in the electronic circuits, and many other factors.

Failure to correct possible offsets and amplitude variations of the source signal results in reduction of accuracy of reproduction of both background and contrast in the recorded image.

In the prior art, a calibration scan is executed, in which the unit acquires black and white samples of the source signal produced by the photosensors in response to the illumination of a black-white scanning strip by the scanning beam.

Black and white are designated by the reflectance signal obtained from a "calibration strip", also called "target", and located mostly adjacent to the image scanning area. Remark that in the case of a feedthrough scanner, a calibration strip may be as well throughput in the form of a calibration sheet, or it may be temporarily turned in the optical scanning path of the apparatus (as e. g. published by Hanna and Melamud, in IBM Technical Disclosure Bulletin, vol. . 21. no.4, september 1978, p. 1410).

The first half of the strip may be imprinted black, or may be absent but replaced by a control signal which turns the lighting beam off e.g. by closing the lens aperture. The second half of the strip may be imprinted white or be apertured with a clear open gate to expose a nominally white background area of the document; or a so-called "Dmin" filter, which is a filter having a density corresponding to a calibrated white reference density, may be introduced in the optical path of the scan-apparatus.

One specific solution to the above-mentioned problem regarding the signal fluctuations, is described in United States patent US-A-3,952,144 and makes preliminary calibrating scans in which sequentially a known black area and a known white area are scanned, and during which a so-called "automatic background and contrast control unit" in the transmitter stores a sample of the uncorrected video input signal at a time when the known black area is being scanned, and also stores a second sample of the uncorrected video input signal at a time when the known white area is being scanned. Thereafter, during the subsequent scanning of the source document the control unit produces voltages representing the stored black and white samples and combines these voltages to correct the video input signal received during the scanning of the source document.

However, when the real density extremes are outlying the range physically incorporated by the calibration strip, said correction method does not guarantee accurate and reliable reproduction of all shades of grey that are available in the source original.

Another calibration method for an image scanner is disclosed in US-A-4 660 082.

### 3. SUMMARY OF THE INVENTION

It is therefore an object of the present invention to provide a method for an automatic offset and gain control, in order to reproduce accurately and reliably all shades of grey or colour that may be present in a source original, even if one density extreme extends beyond the densities of the calibration strip.

It is another object of the invention to improve scans of documents in which the message and the background do not contrast sharply.

Further objects and advantages will become apparant from the description given hereinbelow.

We now have found that the above objects can be achieved by providing a method for processing a variable data-signal representative of the density of a source document, that has been scanned by a lightbeam and the reflected or transmitted light of which has been collected by at least one sensor element, said method comprising the following pixel-related steps:

a) defining a minimum value $V_{min}$, representative of the lowest possible density value which could possibly occur in the source document to be scanned;

b) reading from a calibration reference having a high and a low level of density a sample $V_{bl}$ of the data-signal when said density-value is at its high level and storing this value as an offset-value in a "calibration memory"

$$\text{offset} = V_{bl}$$

c) reading from the calibration reference a second sample $V_w$ of said data-signal when said density-value is at its low level;

d) dividing $(V_{min}-V_{bl})$ by $(V_w-V_{bl})$ and permanently storing the quotient as a gainfactor G in said calibration memory, where

$$G = \frac{V_{min} - V_{bl}}{V_w - V_{bl}|}$$

e) reading the signal values $V_{in}$ by scanning the source document, immediately corrected for offset by subtracting (Vin-Vbl) and continually combining the offset-corrected input values by multiplying with the precalculated gainfactor G, available from the calibration memory

$$V_{corr} = (V_{in} - V_{bl}).\ G$$

In this way, the apparatus will process the variable input signals $V_{in}$ as exact representatives $V_{corr}$ of the reflective gradations in shades of grey in the original. Even, if the lowest density-value of the source signal eventually could reach extremely low values, e.g. below the low calibration level as Vmin ≤ Vin < Vw.

## 5. DETAILED DESCRIPTION OF THE INVENTION

Particular aspects of the present invention and preferred embodiments will be explained hereinbelow with reference to the drawings, in which

figure 1 is a global overview of a scanner system,
figure 2 is a functional sketch of a colour scanner,
figure 3 is a principal diagram of the calibration and source signal levels
figure 4 is a principal block diagram of the calibration,
figure 5 is a principal flow chart of the present calibration,
figure 6 is a preferred embodiment of the present invention,
figure 7 is an alternative embodiment of the present invent.

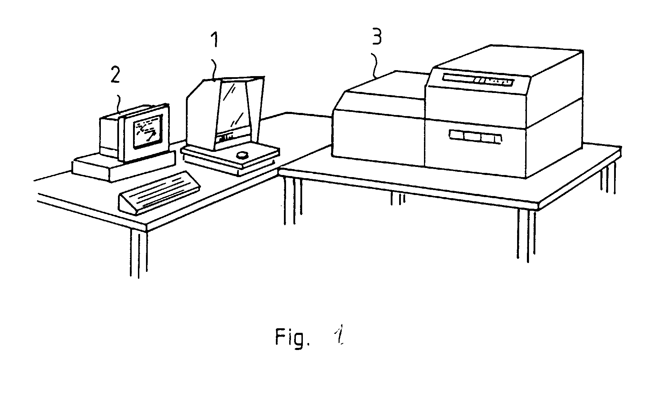

Figure 1 generally shows a system in which the method of the invention can be applied. The scanning and digitising apparatus of figure 1 comprises as main subparts : a viewer or workstation 1, a microprocessor 2, a scanner 3 and possibly a printer or a recorder (not indicated in fig. 1). The devices are interconnected via suitable electronic interfaces.

Information which can be read by such scanner includes information from a reflective or transparent document, a photograph, a film sheet, a map , a table, a character, a symbol and the like. In addition, pattern recognition of a flat object is also included. These info-carriers are further called source documents.

In general, a scanning device of the above-named kind essentially comprises a platen for carrying an image to be scanned. a light-source for illuminating said image, means for directing image-wise modulated light onto an opto-electronic sensor, such as a CCD sensor, and signal digitising means.

In concreto, document scanners are known which comprise a bodily stationary document supporting plate and a scanning unit which is mounted for bodily movement parallel with the plate. In use, a light image of a line across the document is focused within the unit into the optical sensing means so that the document is scanned line by line during a scanning displacement of the unit.

Document scanners are also known which differ from those just referred to in that the scanning unit is fixed and the document supporting plate is mounted for movement relative to said unit.

Also known are feedtrough scanners in which the source document passes a scanning station under well-defined circumstances (as to optical path, moving velocity, etc).

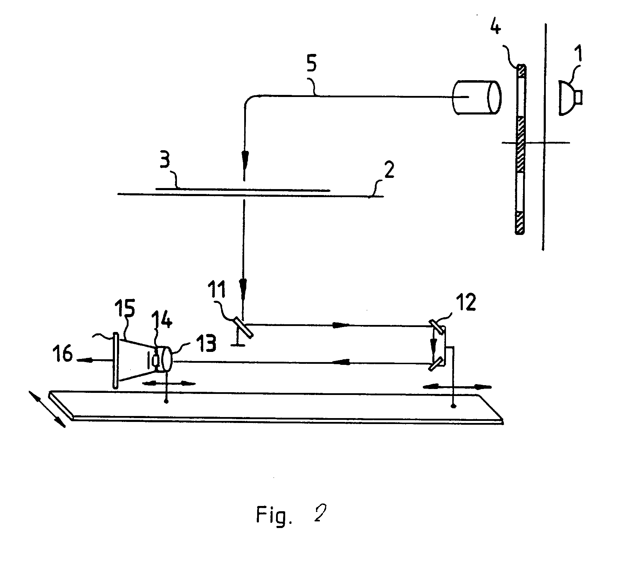

Figure 2 shows a colour scanner comprising a light source 1 for projecting scanning light towards an image plane and a work support 2 for supporting an image-bearing sheet 3 in said image plane. Said light source 1 and said support 2 are relatively displaced by means of a suitable drive mechanism that is not shown in this figure. A filterwheel 4 is provided for separating white light emitted by the light source 1 into colour components and transmission fibres 5 are provided for directing scanner radiation to the image plane. The scanner further comprises suitable optics (11 to 15) for directing image-wise modulated light to an opto-electronic sensor 16, for example a CCD sensor, and means for converting the image-wise radiation into a digitised signal (not shown on the figure).

Sometimes, it is desirable to transmit documents in which the message and the background do not contrast sharply. For example, a document may be printed in blue ink on a light green background.

In order to accurately and reliably reproduce shades of grey that may be present in such original, at least a minimal distance between the variable input signal and a reference level must be established.

In the present invention, we bring a method for processing a variable data-signal representative of the density of a source document, that has been scanned by a lightbeam and the reflected or transmitted light of which has been collected by at least one or preferably a series of CCD sensorelements.

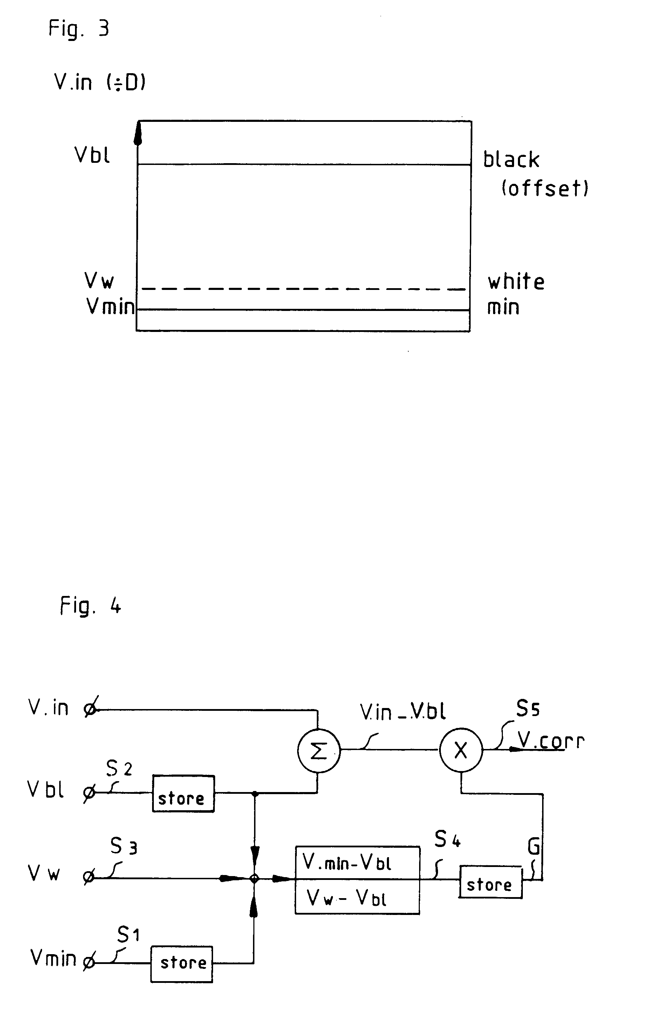

Said method, commonly called calibration procedure, consists of several steps, executed prior to substantially every document scan, and will be explained consecutively in the following paragraphs (with reference to figs 3, 4 and 5).

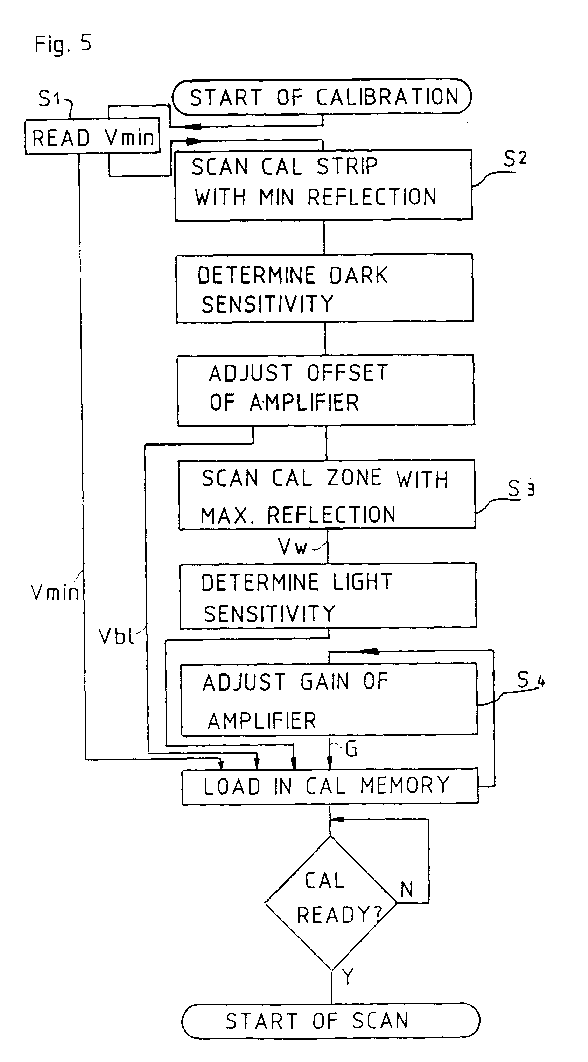

In order to define the range within which the source signal operates, first has to be established a white level reference for the maximum whitness which has to be managed by the scanning apparatus. So, in a first step S1 (see fig. 4 and fig. 5), we define a minimal reference density value Vmin (see also fig. 3), representative of the whitest or lowest possible density value which could possibly occur in the actual source document to be scanned.

In a second step, indicated as S2 in fig. 4 and 5, the apparatus scans the calibration signal at high density-level, equivalent to the minimum reflection by the black area of a calibration strip. After reading a sample $V_{bl}$ of said calibration signal when said density-value is at its highest level, this value is stored as an offset-value in a calibration memory. More specifically, this offset-value is the lowest level of illumination that a sensor cell could experience during a document scan and by the present method, while calibrating, all possible variations in the dark-current are corrected.

In a third step S3, the apparatus scans the low density-level Vw of the calibration signal in order to correct for variations in the shading, by scanning the white part of the strip.

In a fourth step S4, the amplifier is adapted to the point at which the max output of said amplifier is just equal to the reference level $V_{min}$, as may be controlled by an usual electronic comparator. After dividing $(V_{min}-V_{bl})$ by $(V_w-V_{bl})$, the calculated quotient is permanently stored as a gainfactor in a calibration memory

$$G = \frac{V_{min} - V_{bl}}{V_w - V_{bl}}$$

From now on, the apparatus is really capable of starting the ultimate scanning process by determination of the signal strength of the variable input signal $V_{in}$ compared to the reflectance level of the reference.

In this way, the apparatus will process the variable input signals $V_{in}$ as exact representatives $V_{corr}$ of the reflective gradations in shades of grey in the original. Even, if the lowest value of the source signal eventually could reach extremely low values, e.g. on or below the highest calibration level as with $V_{min} \leq V_{in} \leq V_w$.

This means that actually a document having a zone with a whitest density lower or whiter as the usual white density of the conventional calibration strip can be accurately scanned, whereas in the prior art all densities lying between $V_w$ and $V_{min}$ would be compressed. Thus loss of pictorial information, definitely not allowable in electronic apparatus for high quality graphic or medical scanners, is not occurring in the present invention!

Figures 4 and 5 recapitulate the presented calibration method, respectively in a principal block diagram and in a flowchart. Remark that the automatic offset and gain control is applied in a dynamic manner at the beginning of each and every document scan. A calibration operation is thus performed, prior to reading a document, by determining offset and gain for each of the pixel-related amplifiers on the basis of reference signals, mostly generated by reading a black and white reference plate, commonly called calibration strip. The determined offset and gains are stored in a suitable calibration memory.

Thus permanently stored are 2 calibration values, namely

$$offset = V_{bl}$$

and

gain

$$G = \frac{V_{min} - V_{bl}}{V_w - V_{bl}}$$

While the intrinsic scanning consists of reading the signal values $V_{in}$ by scanning the source document, immediately corrected for offset by subtracting $(V_{in}-V_{bl})$ and continually combining the offset-corrected input value by multiplying with the precalculated gainfactor G available from the calibration memory, as a result, the resulting image signal will not be influenced by variations in the optical system.

$$V_{corr} = (V_{in} - V_{bl}) \cdot G$$

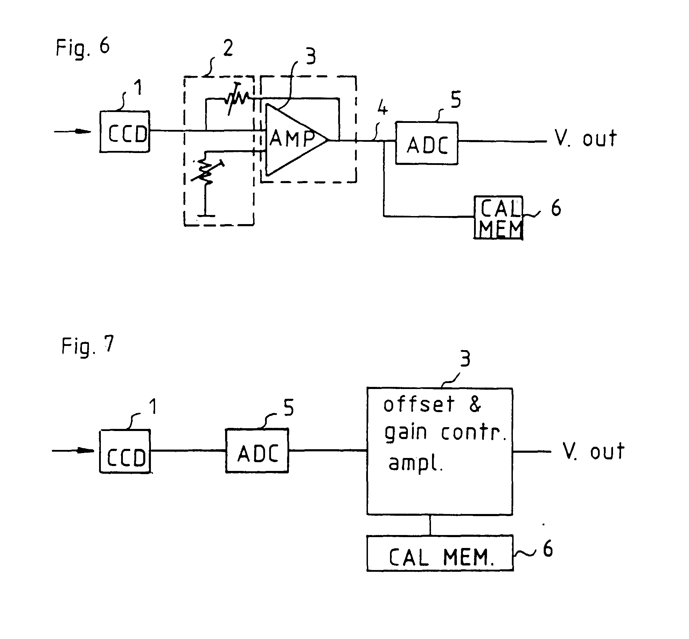

Figure 6 is a principal scheme of a preferred embodiment of the present invention. Some (e.g. gating) circuit is not shown in this figure for purposes of simplicity.

Herein, sensor area 1, without limitation thereto, is a linear CCD having a line of multiple, e.g. 5000 photoelectric conversion elements, which can distinguish 400 pixels per inch on the document, by which the optical input is converted into an electric signal, in this text referred to as "source signal".

For each of the CCD-line sensors 1 an amplifier 3 with an adjustable offset and gain 2 is provided. This illustrates another advantage of the present invention, namely the inherent compensation of sensitivity nonuniformity that exists between the individual cells of the sensor array.

After said calibration conform to the present invention and the results of which are stored for future retrieval in a so-called calibration memory 6, the effective document scanning begins and original exposure is started. The analog electrical signal content of the sensor array is perodically read out, pixel by pixel and row by row.

The outputs from the CCD's 1 are corrected by the obtained offset and gains (ref 2 in Fig.6), with the positive result that the signal 4 at the output of the amplifier 3 varies exactly in correspondance with the variations in reflectance of the scanned original. For example, zero voltage or a minimum voltage might correspond to a white portion; a maximum voltage would correspond to a black area and intermediate volt to various shades of grey (see also fig. 3).

Figure 7 gives an alternative preferred embodiment of the present invention. Herein, part of the analog circuit has been replaced by means for causing the output of the sensor 1 to convert into a digital signal through an A/D converter 5, thereafter calibrating an amplifier 3 with adjustable offset and gain and causing this digitised calibration signal to store in a digital memory 6 as e.g. a random access memory or RAM.

As the document pixels are read, the analog signal received from each pixel-element 1 is applied to the input of an analog to digital convertor 5. The thus generated conversion for each original pixel may be a multi-bit digital signal, which allows the sensing of different levels of blackness within each pixel.

Several other embodiments of the present invention may be developed without departing from the essential characteristics thereof. Such variations do not deviate essentially from the scope of the present invention defined by the claims.

In view of the technological progress and the higher stability of modern electronics, one might replace the reference or calibration strip by predetermined values built in the scanner during its manufacturing. Whether minimum and maximum density are established by a black and white physical target or by a black and white software programmed reference, makes no conceptual difference.

As to the type of scanner-apparatus, the present invention is largely universal, e.g. it may be applied succesfully to scanners with moving platen for carrying the source original, to scanners with stationary platen but moving optics, as well as to feedthrough scanners.

Although the previously mentioned embodiment of the present invention has been described regarding reflection source originals, the same concept may be adapted for transparant source documents, by defining $V_{min}$ through the lightest "most transparant" zone which could possibly occur in the source document to be scanned.

In addition, the present invention may also be applied for scanning of so-called "inverse-setted or mirrored" source originals, presenting light characters on a dark paper or carrier-background.

Furthermore, in the case of a colour scanner, the method according to the present invention, may be iterated pro colour selection. During the respective preliminary scans, the same said calibration strip is then scanned consecutively through means of colour-typical filters with suitable characteristics concerning spectral transmission and absorption.

As known to the people skilled in the art, other image processing techniques might be applied on the output signal, such as e. g. dithering, unsharp masking etc.

Although the invention as described above relates to a method for correcting unwanted offset and/or gain variations suitable for being used in a graphical scanning system, it may also be employed in document management application or in a scanning system suitable for use in medical or industrial, e.g. non-destructive testing, diagnostic applications.

Recent developments apply to computerised diagnostics, memorising on stimulable phosphor plates, reproducing hardcopy by means of thermal sublimation or resistive ribbon, and so on.

In these applications the wording "density of a source document" has to be interpreted as "light reflected by or transmitted through a source original" and still remains under the same scope and protection of the present invention.

## Claims

1. Method for processing a variable data-signal representative of the density of a source document, that has been scanned by a lightbeam and the reflected or transmitted light of which has been collected by at least one sensor element, said method comprising the following pixel-related steps:

   a) defining a minimum value $V_{min}$, representative of the lowest possible density value which could possibly occur in the source document to be scanned;

   b) reading from a calibration reference having a high and a low level density a sample $V_{bl}$ of the data-signal when said density-value is at its high level and storing this value as offset in a calibration memory

   $$offset = V_{bl}$$

   c) reading from a calibration reference a second sample Vw of said data-signal when said density-value is at its low level;

   d) dividing $(V_{min} - V_{bl})$ by $(V_w - V_{bl})$ and permanently storing the quotient as a gainfactor G in said calibration memory, where

   $$G = \frac{V_{min} - V_{bl}}{V_w - V_{bl}}$$

   e) reading the signal values by scanning the source document, immediately corrected for offset by subtracting $(V_{in} - V_{bl})$ and continually combining the offset-corrected input values by multiplying with the precalculated gainfactor available from the calibration memory G, so as to form

$$V_{corr} = (V_{in} - V_{bl}) \cdot G$$

2. A method according to claim 1 wherein said calibration reference is a calibration strip consisting of a predetermined black area and a predetermined white area.

3. A method according to claim 2 wherein said black and white areas are established on the face of a calibration strip which is positioned outside the area of the document being scanned.

4. A method according to claim 1 wherein said calibration reference is a set of preprogrammed calibration values.

5. A method according to claim 1, characterised in that the sensor element is a CCD-element.

**Patentansprüche**

1. Verfahren zur Verarbeitung eines variablen Datensignals, das die Schwärzung eines Quellendokuments darstellt, das durch einen Lichtstrahl abgetastet wurde und dessen reflektiertes oder durchgelassenes Licht durch mindestens ein Sensorelement gesammelt wurde, wobei das Verfahren die folgenden bildpunktbezogenen Schritte umfaßt:

    a) Definieren eines Minimalwerts $V_{min}$, der den niedrigsten möglichen Schwärzungswert darstellt, der überhaupt in dem abzutastenden Quellendokument auftreten kann;
    b) Lesen, aus einer Eichbezugsprobe mit einem hohen und einem niedrigen Schwärzungsgrad, eines Abtastwerts $V_{bl}$ des Datensignals, wenn sich der besagte Schwärzungswert auf seinem hohen Pegel befindet, und Speichern dieses Wertes als ein Offset-Wert in einem Eichungsspeicher:

$$\text{offset} = V_{bl}$$

    c) Lesen, aus einer Eichbezugsprobe, eines zweiten Abtastwerts Vw des besagten Datensignals, wenn sich der besagte Schwärzungswert auf seinem niedrigen Pegel befindet;
    d) Dividieren von $(V_{min}-V_{bl})$ durch $(V_w-V_{bl})$ und permanentes Speichern des Quotienten als einen Verstärkungsfaktor G in dem besagten Eichungsspeicher, wobei

$$G = \frac{V_{min} - V_{bl}}{V_w - V_{bl}}$$

    e) Lesen der Signalwerte durch Abtasten des Quellendokuments unter unmittelbarer Korrektur auf Offset durch Subtrahieren $(V_{in} - V_{bl})$ und ständiges Kombinieren der offsetkorrigierten Eingangswerte durch Multiplizieren mit dem im voraus berechneten Verstärkungsfaktor G, der aus dem Eichungsspeicher verfügbar ist, so daß

$$V_{corr} = (V_{in} - V_{bl}) \cdot G$$

2. Verfahren nach Anspruch 1, wobei die besagte Eichbezugsprobe ein Eichstreifen ist, der aus einem vorbestimmten schwarzen Bereich und einem vorbestimmten weißen Bereich besteht.

3. Verfahren nach Anspruch 2, wobei der besagte schwarze und der besagte weiße Bereich auf der Fläche eines Eichstreifens eingerichtet werden, der außerhalb des Bereichs des abgetasteten Dokuments positioniert wird.

4. Verfahren nach Anspruch 1, wobei die besagte Eichbezugsprobe eine Menge von vorprogrammierten Eichwerten ist.

5. Verfahren nach Anspruch 1, dadurch gekennzeichet, daß das Sensorelement ein CCD-Element ist.

**Revendications**

1. Procédé de traitement d'un signal de données variable représentatif de la densité d'un document source, qui a été balayé par un faisceau lumineux dont la lumière réfléchie ou transmise a été recueillie par au moins un élément capteur, ledit procédé comprenant les étapes suivantes, relatives au pixel:

    a) définir une valeur minimale $V_{min}$, représentative de la valeur de densité la plus faible possible susceptible de survenir dans le document source à balayer;
    b) lire, depuis une référence de calibrage ayant un niveau haut et un niveau bas de densité, un échantillon Vbl du signal de données lorsque ladite valeur de densité est à son niveau haut et mémoriser cette valeur comme décalage dans une mémoire de calibrage

$$\text{décalage} = V_{bl}$$

    c) lire, depuis une référence de calibrage, un deuxième échantillon Vw dudit signal de données lorsque ladite valeur de densité est à son niveau bas;

d) diviser $(V_{min}-V_{bl})$ par $(V_w-V_{bl})$ et mémoriser de façon permanente le quotient comme facteur de gain G dans ladite mémoire de calibrage, où

$$G = \frac{V_{min} - V_{bl}}{V_w - V_{bl}}$$

e) lire les valeurs de signal en balayant le document source, dont le décalage est immédiatement corrigé en soustrayant $(V_{in}-V_{bl})$ et en combinant de façon continue les valeurs d'entrée à décalage corrigé en multipliant par le facteur de gain G calculé préalablement, disponible dans la mémoire de calibrage, de manière à former

$$V_{corr} = (V_{in} - V_{bl}).\ G$$

2. Procédé selon la revendication 1, dans lequel ladite référence de calibrage est une bande de calibrage comprenant une zone noire prédéterminée et une zone blanche prédéterminée.

3. Procédé selon la revendication 2, dans lequel lesdites zones noire et blanche sont établies sur la face d'une bande de calibrage qui est positionnée à l'extérieur de la zone du document en train d'être balayé.

4. Procédé selon la revendication 1, dans lequel ladite référence de calibrage est un ensemble de valeurs de calibrage préprogrammées.

5. Procédé selon la revendication 1, caractérisé en ce que l'élément capteur est un élément à CCD.

Fig. 1

Fig. 2

Fig. 3

V.in (÷D)

| | |
|---|---|
| Vbl | black (offset) |
| Vw | white |
| Vmin | min |

Fig. 4

V.in

V.in − V.bl    S5
V.corr

Vbl    S2    store

V.min − Vbl
Vw − Vbl    S4    store    G

Vw    S3

Vmin    S1    store

Fig. 5

Fig. 6

Fig. 7